# EUROPÄISCHE PATENTANMELDUNG

(11) **EP 0 785 250 A1**
(43) Veröffentlichungstag der Anmeldung: **23.07.1997**
(21) Anmeldenummer: 97104945.7
(22) Anmeldetag: 16.08.1994
(51) Int. Cl.: C11D 1/10, C11D 3/33, C11D 1/00

(54) **Phenolische Komplexbildner**

(30) Priorität: 26.08.1993 DE 4328670
(62) Teilanmeldung aus: 94924877.7
(71) Anmelder: BASF AKTIENGESELLSCHAFT, 67056 Ludwigshafen (DE)
(72) Erfinder: Schneider, Jürgen, Dr., 67251 Freinsheim (DE); Oftring, Alfred, Dr., 67098 Bad Dürkheim (DE); Freyberg, Peter, Dr., 67063 Ludwigshafen (DE); Schuhmacher, Rudolf, Dr., 67459 Böhl-Iggelheim (DE); Baur, Richard, Dr., 67112 Mutterstadt (DE); Potthoff-Karl, Birgit, Dr., 67061 Ludwigshafen (DE); Kud, Alexander, Dr., 55234 Eppelsheim (DE)

(57) **Zusammenfassung**

Verwendung von Phenolderivaten I oder II 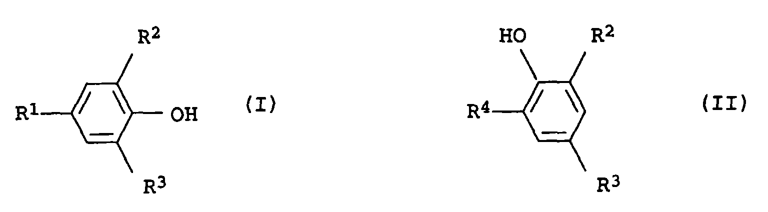 bei denen
- R¹: C₆- bis C₂₀-Alkyl oder -Alkenyl, welches durch ein oder mehrere nicht benachbarte Sauerstoffatome unterbrochen sein kann, oder eine Gruppe der Formel -O-CO-R⁵, -CO-O-R⁵, -NH-CO-R⁵, -NR⁶-CO-R⁵, -CO-NH-R⁵, -CO-NR⁶-R⁵, -NH-SO₂-R⁵, -NR⁶-SO₂-R⁵, -SO₂-NH-R⁵ oder -SO₂-NR⁶-R⁵ bedeutet, wobei R⁵ für C₆- bis C₂₀-Alkyl oder -Alkenyl, welches durch ein oder mehrere nicht benachbarte Sauer stoffatome unterbrochen sein kann, und R⁶ für C₁- bis C₄-Alkyl steht,
- R² und R³: Wasserstoff oder eine Gruppe der Formel -CH₂-N(CH₂COOM)₂, in der M für Wasserstoff, Alkalimetall, Ammonium oder substituiertes Ammonium steht, bezeichnet, wobei mindestens einer der Reste R² oder R³ eine Gruppe der Formel -CH₂-N(CH₂COOM)₂ bezeichnen muß, und
- R⁴: für eine Gruppe der Formel -CO-O-R⁵, -CO-NH-R⁵ oder CO-NR⁶-R⁵ steht,
als Komplexbildner für Erdalkali- und Schwermetallionen in Bleichbädern in der Papier- und Zellstoffindustrie.

## Beschreibung

Die vorliegende Erfindung betrifft die Verwendung von phenolischen Komplexbildnern für Erdalkali- und Schwermetallionen der allgemeinen Formel I oder II 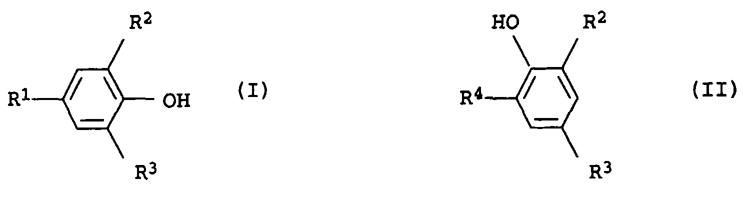 in denen
- R¹: C₆- bis C₂₀-Alkyl oder -Alkenyl, welches durch ein oder mehrere nicht benachbarte Sauerstoffatome unterbrochen sein kann, oder eine Gruppe der Formel -O-CO-R⁵, -CO-O-R⁵, -NH-CO-R⁵, -NR⁶-CO-R⁵, -CO-NH-R⁵, -CO-NR⁶-R⁵, -NH-SO₂-R⁵, -NR⁶-SO₂-R⁵, -SO₂-NH-R⁵ oder -SO₂-NR⁶-R⁵ bedeutet, wobei R⁵ für C₆- bis C₂₀-Alkyl oder -Alkenyl, welches durch ein oder mehrere nicht benachbarte Sauerstoffatome unterbrochen sein kann, und R⁶ für C₁- bis C₄-Alkyl steht,
- R² und R³: Wasserstoff oder eine Gruppe der Formel -CH₂-N(CH₂COOM)₂, in der M für Wasserstoff, Alkalimetall, Ammonium oder substituiertes Ammonium steht, bezeichnet, wobei mindestens einer der Reste R² oder R³ eine Gruppe der Formel -CH₂-N(CH₂COOM)₂ bezeichnen muß, und
- R⁴: für eine Gruppe der Formel -CO-O-R⁵, -CO-NH-R⁵ oder CO-NR⁶-R⁵ steht,
für die in Anspruch 1 genannten technischen Anwendungsgebiete.

Phenolische Komplexbildner der Struktur I oder II sind im Prinzip bekannt. So werden in der JP-OS 84/157 062 (1) der Formel I analoge Verbindungen offenbart, in der anstelle von R¹ C₆- bis C₁₅-Alkyl, Phenyl, C₇- bis C₄₀-Alkanamid, C₆- bis C₂₀-Sulfonamid, C₇- bis C₁₇-Alkoxycarbonyl, C₇- bis C₁₇-Carbamoyl, C₆- bis C₁₉-Sulfamoyl, C₆- bis C₁₀-Sulfonyl oder eine heterocyclische Gruppe steht. Diese Verbindungen haben verbesserte Eigenschaften bezüglich ihrer metallkomplexierenden Wirkung.

Aus der EP-A 426 876 (2) sind Flüssigwaschmittelformulierungen für die Textilwäsche bekannt, die als anionische Tenside Verbindungen gemäß Formel I oder II enthalten.

Als Komplexbildner für Erdalkali- und Schwermetallionen auf den verschiedensten technischen Gebieten mit ihren teilweise stark voneinander abweichenden Anforderungs- und Problemfeldern werden üblicherweise immer noch altbekannte und bewährte Systeme wie Polyphosphate, Nitrilotriessigsäure oder Ethylendiamintetraessigsäure eingesetzt. Diese Mittel zeigen allerdings gewisse Nachteile, prinzipielle Schwachpunkte sind insbesondere ihr noch verbesserungsbedürftiges Calcium- und Mangan-Bindevermögen, ihre noch nicht optimale stabilisierende Wirkung in Bleichbädern und Bleichsystemen, insbesondere auf hauptsächlich aus Cellulose bestehenden Substraten wie Baumwolle oder Papier, sowie ihre meist unzureichende biologische Abbaubarkeit bzw. Eliminierbarkeit.

Aufgabe der vorliegenden Erfindung war es daher, auf einigen speziellen technischen Anwendungsgebieten in ihren Eigenschaften verbesserte Komplexbildner für Erdalkali- und Schwermetallionen bereitzustellen, da die bekannten Mittel des Standes der Technik dort Mängel aufweisen.

Demgemäß wurde die Verwendung der eingangs definierten Phenolderivate I und II als Komplexbildner für Erdalkali- und Schwermetallionen gefunden, welche dadurch gekennzeichnet ist, daß man sie in Bleichbädern in der Papier- und Zellstoffindustrie einsetzt.

Der Rest R¹ bzw. R⁵ in den Formeln I und II steht vor allem für geradkettiges oder verzweigtes C₆- bis C₂₀-Alkyl oder -Alkenyl, insbesondere für C₈- bis C₁₈-Alkyl, z.B. n-Hexyl, n-Heptyl, n-Octyl, 2-Ethylhexyl, n-Nonyl, iso-Nonyl, n-Decyl, iso-Decyl, n-Undecyl, iso-Undecyl, n-Dodecyl, iso-Dodecyl, n-Tridecyl, iso-Tridecyl, n-Tetradecyl, n-Hexadecyl, n-Octadecyl oder n-Eicosyl. Eine Unterbrechung durch nicht benachbarte Sauerstoffatome in Form von beispielsweise Polyethylenglykolether-Strukturen kann zur Einstellung der Balance von Hydrophilie und Hydrophobie im Molekül dienen, Beispiele für derartige Reste sind n-C₁₂H₂₅-(OCH₂CH₂)ₘ- (m = 2 bis 4) und n-C₁₀H₂₁-O-CH₂-.

Als Rest R⁶ am Amid-Stickstoff kommen Ethyl, n-Propyl, iso-Propyl, n-Butyl, iso-Butyl, sec.-Butyl, tert.-Butyl und insbesondere Methyl in Betracht.

Als Salze der Verbindungen I bzw. II eignen sich vor allem die Natrium-, Kalium- und Ammoniumsalze, insbesondere das Di- bzw. Tetranatrium-, das Di- bzw. Tetrakalium- und das Di- bzw. Tetraammoniumsalz, je nachdem, ob eine oder zwei -CH₂-N(CH₂COOM)₂-Gruppen im Molekül vorliegen, sowie organische Aminsalze mit einem tertiären Stickstoffatom.

Als den organischen Aminsalzen zugrundeliegende Basen kommen insbesondere tertiäre Amine wie Trialkylamine mit 1 bis 4 C-Atomen im Alkyl, z.B. Trimethyl- und Triethylamin, und Trialkanolamine mit 2 oder 3 C-Atomen im Alkanolrest, z.B. Triethanolamin, Tri-n-propanolamin oder Triisopropanolamin, in Betracht.

In einer bevorzugten Ausführungsform verwendet man Phenolderivate der allgemeinen Formel Ia 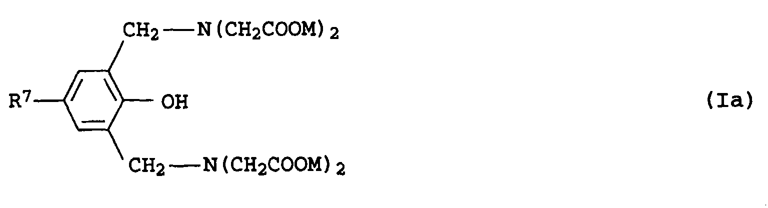 in der
- R⁷: C₈- bis C₁₈-Alkyl bedeutet und
- M: für Wasserstoff, Alkalimetall, Ammonium oder substituiertes Ammonium steht.

Ganz besonders bevorzugt werden Phenolderivate Ia, bei denen R⁷ für n-Dodecyl oder insbesondere iso-Dodecyl steht.

Die Verbindungen I bzw. II lassen sich, wie bereits in (2) beschrieben, am besten durch eine einstufige Mannich-Reaktion aus den entsprechenden Phenolen und jeweils 1 oder 2 mol Formaldehyd und Iminodiessigsäure herstellen.

Die beschriebenen Verbindungen I und II und ihre Salze sind in hervorragender Weise geeignet, Erdalkali- und Schwermetallionen, insbesondere Calcium-, Magnesium-, Eisen-, Nickel-, Zink-, Kupfer- und Manganionen, zu komplexieren. Aufgrund dieser Fähigkeit weisen sie eine Vielzahl von technischen Anwendungsmöglichkeiten auf. Da es sich um biologisch abbaubare oder eliminierbare Verbindungen handelt, können sie in großen Mengen überall dort eingesetzt werden, wo die Abwässer geklärt werden müssen und auch phosphorhaltige Verbindungen wie Phosphate vermieden werden sollen.

Die erfindungsgemäße Verwendung für die Verbindungen I und II und ihre Salze liegt in Bleichbädern in der Papierindustrie und der Zellstoffindustrie. Hier werden Komplexbildner bei der reduktiven Bleiche, z. B. mit Natriumdithionit, oder bei der oxidativen Bleiche, z. B. mit Wasserstoffperoxid, benötigt, um die Effektivität des Bleichprozesses, d. h. den Weißgrad des Holzschiffes, zu erhöhen. Die Komplexbildner dienen so zur Eliminierung von Schwermetallkationen, hauptsächlich von Kupfer und insbesondere Eisen und Mangan, aus den bei der Papierherstellung eingesetzten technischen Rohstoffen und Hilfsstoffen. Diese Metallionen wirken bei der Harzleimung mit Alaun und Natriumresinat störend durch die Bildung unlöslicher Salze. Die Ablagerung von Eisen auf Papier führt zu "heißen Flecken", an denen die oxidative katalytische Zerstörung der Zellulose beginnt. Schwerbleichbare Holzschliffe und andere Papierrohstoffe enthalten oft sogar unverhältnismäßig viel Eisen. Im Gegensatz zu Eisen(II)-Ionen reagieren Eisen(III)-Ionen mit Bestandteilen des Holzes unter Bildung dunkelgefärbter Verbindungen. Durch den unmittelbaren Einsatz von Komplexbildnern bei der Herstellung der Papierrohstoffe, insbesondere bei der Holzschliffherstellung, kann bereits eine Aufhellung des Papierrohstoffs erzielt werden, so daß nach beendeter Bleiche der Weißgrad um etwa 2 bis 3 Punkte höher liegt als vorher. Durch Zusätze von Phenolderivaten I oder II oder ihren Salzen zum Schleifereikreislaufwasser erzielt man bei der oxidativen, reduktiven oder kombinierten Bleiche eine deutliche Weißgradsteigerung.

Bei der oxidativen Bleiche mit wäßrigen Peroxidlösungen wirken bereits Spuren von Schwermetallionen störend, weil sie die wäßrigen Peroxidlösungen zersetzen. Zur Stabilisierung der Peroxidlösungen verwendet man deshalb beim Ansetzen der Bleichlösungen größere Mengen an Wasserglas als Stabilisator. Der Einsatz von Wasserglas führt jedoch zu einer Verschlechterung der Entwässerung des gebleichten Papierstoffs und kann darüber hinaus Ablagerungen auf dem Papier und den Filzen der Papiermaschine verursachen. Ein Teil des in den Bleichlösungen vorhandenen Wasserglases kann durch Phenolderivate I oder II oder ihrer Salze ersetzt werden, so daß man ein Bleichergebnis erzielt, das dem Bleichergebnis entspricht, das mit höheren Mengen an Wasserglas in der Bleichlösung enthalten wird. Die Mitverwendung von Phenolderivaten I oder II in Bleichlösungen führt somit zu einer Einsparung von Wasserstoffperoxid bei der oxidativen Bleiche.

Auch beim Deinken von bedrucktem Altpapier, das hauptsächlich mit der Kombination Peroxid, Wasserglas, Natriumhydroxid, Dispergiermittel und Sammler durchgeführt wird, kann man einen erheblichen Anteil, z.B. bis zu 20 Gew.-% des Wasserglases, durch Phenolderivate I oder II oder deren Salze ersetzen und einen signifikanten Anteil an Wasserstoffperoxid einsparen, ohne eine Weißgradeinbuße beim Deinken von Altpapier hinnehmen zu müssen.

Aufgrund der immer stärkeren Schließung des Wasserkreislaufes der Papiermaschinen findet darin eine stetige Anreicherung von Härtebildner statt. Dies kann zur Ausfällung von Carbonaten, Silikaten und Phosphaten führen, wodurch die Papiereigenschaften wie Festigkeit, Saugfähigkeit, Anfärbbarkeit und Staubverhalten unmittelbar beeinträchtigt werden können. Die Härtebildner können außerdem die Wirksamkeit von Hilfsmitteln und die Eigenschaften von Farbstoffen beeinträchtigen. Die Verwendung von Phenolderivaten I oder II und ihrer Salze im Papierstoff vermindert oder beseitigt die negativen Einflüsse der Härtebildner bei der Papierherstellung.

Darüber hinaus hat sich der Einsatz von Phenolderivaten I oder II und ihrer Salze in Verbindung mit Netzmitteln bei der kontinuierlichen Filzwäsche bewährt. Ausfällungen von Härtebildnern mit Harzleim bzw. Zellstoffharz und Fällungsprodukte des Aluminiumsulfats werden aufgelöst, so daß ein Verlegen der Naßfilze der Papiermaschinen weitgehend verhindert wird. Die Entwässerungsfähigkeit der Filze bleibt dadurch über einen längeren Zeitraum erhalten.

Als Reduktionsmittel für die Bleiche von Holzschliffen und Papierrohstoffen kommen in erster Linie Salze der dithionigen Säure in Frage, insbesondere Natriumdithionit (Na₂S₂O₄) und Zinkdithionit (ZnS₂O₄), die entweder direkt als Substanz oder in wäßriger Lösung eingesetzt werden oder aber in der Papier- oder Zellstoffabrik nach bekannten Methoden, z.B. aus Natriumboranat und Schwefeldioxid bzw. Natriumsulfit oder Natriumbisulfit, hergestellt werden. Man kann aber auch Formamidinsulfinsäure (CH₄N₂O₂S), auch als Thioharnstoffdioxid bekannt, oder deren Alkalimetallsalze verwenden. Wirksam sind auch Natriumsulfit und Natriumbisulfit oder auch schwefelfreie Reduktionsmittel wie Natriumboranat. Technisch am interessantesten ist allerdings die Verwendung von Salzen des Dithionits, unabhängig von ihrer Herstellungsweise. Vorzugsweise verwendet man Natriumdithionit.

Die Phenolderivate I oder II und ihre Salze werden üblicherweise in Mengen von 0,01 bis 0,5, vorzugsweise 0,05 bis 0,4 Gew.-%, bezogen auf Faserstoff bei der Bleiche, bei der Papierherstellung und beim Deinking von bedrucktem Altpapier eingesetzt.

Ein typische Formulierung eines wäßrigen reduktiven Bleichbades in der Papierindustrie für Holzschliff (beispielsweise 4 Gew.-% Stoffdichte) enthält 0,05 bis 0,1 Gew.-% des Phenolderivates I oder II als Komplexbildner und ca. 1 Gew.-% Natriumdithionit, jeweils bezogen auf den Holzschliff. Die Badtemperatur beträgt ca. 60°C, die Bleichzeit normalerweise 1 Stunde und der pH-Wert ca. 5,8.

Eine typische Formulierung eines wäßrigen oxidativen Bleichbades in der Papierindustrie für Holzschliff (beispielsweise 20 Gew.-% Stoffdichte) enthält 0,05 bis 0,15 Gew.-% des Phenolderivates I oder II als Komplexbildner, ca. 2 Gew.-% Wasserglas, ca. 0,75 Gew.-% NaOH und ca. 1 Gew.-% H₂O₂, jeweils bezogen auf den Holzschliff. Die Badtemperatur beträgt ca. 50°C und die Bleichzeit normalerweise 2 Stunden.

Eine vorteilhafte Wirkung der Phenolderivate I und II bzw. ihrer Salze liegt der Bleichmittelstabilisierung, beispielsweise bei der Bleiche von hauptsächlich aus Cellulose bestehenden Substraten wie Textilien, Zellstoff oder Papierstoff. Spuren von Schwermetallen wie Eisen, Kupfer und Mangan kommen in den Komponenten des Bleichbades selbst, im Wasser und im zu bleichenden Gut vor und katalysieren die Zersetzung des Bleichmittels. Die Verbindungen I und II binden diese Metallionen und verhindern die unerwünschte Zersetzung des Bleichsystems während der Lagerung und bei der Anwendung. Dadurch erhöht sich die Effizienz des Bleichsystems und Schädigungen des zu bleichenden Gutes werden zurückgedrängt.

Die Phenolderivate I und II und ihre Salze eignen sich vor allem deshalb so gut für die beschriebenen Anwendungszwecke, weil sie außerordentlich effektive Komplexbildner für Erdalkalimetallionen und für Schwermetallionen, insbesondere für Calcium und Mangan, darstellen. Ihr Calcium- und ihr Mangan-Bindevermögen sind außergewöhnlich hoch.

Weitere Vorteile sind ihr geringes Toxizitätspotential und ihre ausreichende biologische Abbaubarkeit oder Eliminierbarkeit.

### Beispiele

### Beispiel 1

### Reduktives Bleichbad für die Papierherstellung

100 g einer Holzschliffsuspension mit einer Stoffdichte von 4 Gew.-% wurden in einen Beutel aus Polyethylen gefüllt und mit, jeweils bezogen auf trockenen Holzschliff, 1 Gew.-% Natriumditionit und 0,06 Gew.-% 2,6-Bis(amino-N,N-diessigsäure-methyl)-4-iso-dodecylphenol-Tetranatriumsalz versetzt. Der pH-Wert der Holzschliffaufschlämmung betrug 5,8. Der Beutel wurde dann verschlossen und der Inhalt durch intensives Kneten homogenisiert. Der Beutel wurde nach dem Durchmischen des Inhalts für 1 Stunde in ein Wasserbad eingebracht, das eine Temperatur von 60°C hatte. Danach wurden aus der gebleichten Holzschliffsuspension auf einem Rapid-Köthen-Blatt-Bildner Papierblätter mit einem Flächengewicht von 140 g pro/m² hergestellt und die Weiße der Papierblätter wurde mit einem Elrepho-Photometer bei einer Wellenlänge von 457 nm als Prozent Remissionsgrad bestimmt. Die Papierweise betrug 64,1 %.

### Vergleichsbeispiel A

### Reduktives Bleichbad für die Papierherstellung

Beispiel 1 wurde mit der Ausnahme wiederholt, daß dem Holzschliff kein Komplexbildner zugesetzt wurde. Die Weiße von Papierblättern, die aus dem gebleichten Holzschliff hergestellt wurden, betrug 63,2 %.

### Beispiel 2 und Vergleichsbeispiel B

### Stabilisierung einer alkalischen Wasserstoffperoxid-Bleichflotte

Zur Prüfung der stabilisierenden Wirkung von Komplexbildnern auf Wasserstoffperoxid im alkalischen Medium wurden 1 g oder 2 g 2,6-Bis(amino-N,N-diessigsäure-methyl)-4-iso-dodecyl-phenol-Tetranatriumsalz in ca. 800 ml Wasser von 10 °dH gelöst. Der pH-Wert wurde mit verdünnter Natronlauge oder Schwefelsäure auf 7 eingestellt. Dann wurden die in der Tabelle 1 angegebenen Mengen Natriumhydroxid zugesetzt und die Lösungen nach Zugabe von jeweils 20 ml 35 gew.-%igem wäßrigem H₂O₂ mit destilliertem Wasser auf 1 Liter aufgefüllt.

Der Nullwert der Peroxidgehalte der Lösungen wurde durch Titration von 5 ml der jeweiligen Lösung mit 0,1 normaler KMnO₄-Lösung in üblicher Art ermittelt.

Jeweils 100 ml dieser Peroxidlösung wurden mit 0,5 ml wäßriger Prüflösung eines Mischkatalysators versetzt und 2 Stunden bei 80°C thermostatisiert. Nach Abkühlen auf 25 bis 30°C innerhalb von 10 Minuten wurden jeweils 5 ml entnommen und mit 0,1 normaler KMnO₄-Lösung titriert. Durch Vergleich mit dem Nullwert ergab sich der prozentuale Restanteil an Peroxid.

Die Stammlösung des Mischkatalysators wurde folgendermaßen hergestellt:

In einem Erlenmeyerkolben wurden
1,0 g FeCl₃·6H₂O
0,1 g MnSO₄·H₂O
0,1 g CuSO₄·5H₂O
in destillierten Wasser gelöst, dann 0,35 g konzentrierte Salzsäure zugegeben und es wurde auf 100 g mit destilliertem Wasser aufgefüllt.

Diese Stammlösung mußte klar sein. Traten nach längerem Stehen Niederschläge auf, mußte sie neu angesetzt werden.

Von obiger Stammlösung wurden zur Herstellung der Prüflösung 10 g in einem Erlenmeyerkolben eingewogen und auf 100 g mit destilliertem Wasser aufgefüllt. Die Prüflösung wurde stets frisch angesetzt, da ihre Haltbarkeit begrenzt ist.

Der Mischkatalysatorzusatz simulierte auf reproduzierbare Art die negative Auswirkung von Schwermetallen, insbesondere von Eisen, auf die Stabilität des Wasserstoffperoxids.

Die Ergebnisse der Untersuchungen zur Stabilisierung von alkalischen Wasserstoffperoxidbädern zeigt die Tabelle 1. Durch die Zugabe des 2,6-Bis(amino-N,N-diessigsäure-methyl)-4-iso-dodecyl-phenol-Tetranatriumsalzes als Komplexbildner in verschiedenen Konzentrationen (Beispiel 2) wurden wesentlich höhere Restperoxidgehalte nach der Lagerung bei 80°C erhalten als bei Fehlen stabilisierend wirkender Verbindungen (Vergleichsbeispiel B).

**Tabelle 1**

| Restperoxid-Gehalt nach 2 Stunden bei 80°C (in %, bezogen auf den Nullwert ≙ 100 %) | | | |
|---|---|---|---|
| NaOH-Menge | Ohne Zugabe eines Hilfsmittels | Zugabe des Komplexbildners in Mengen von | |
| | | 1 g | 2 g |
| 10 g | 6 | 67 | 79 |
| 15 g | 0 | 49 | 66 |

## Patentansprüche

1. Verwendung von Phenolderivaten der allgemeinen Formel I oder II 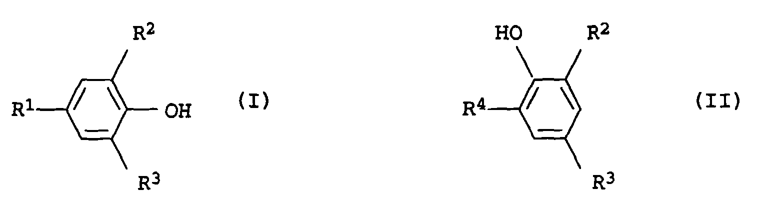 in denen
R¹ C₆- bis C₂₀-Alkyl oder -Alkenyl, welches durch ein oder mehrere nicht benachbarte Sauerstoffatome unterbrochen sein kann, oder eine Gruppe der Formel -O-CO-R⁵, -CO-O-R⁵, -NH-CO-R⁵, -NR⁶-CO-R⁵, -CO-NH-R⁵, -CO-NR⁶-R⁵, -NH-SO₂-R⁵, -NR⁶-SO₂-R⁵, -SO₂-NH-R⁵ oder -SO₂-NR⁶-R⁵ bedeutet, wobei R⁵ für C₆- bis C₂₀-Alkyl oder -Alkenyl, welches durch ein oder mehrere nicht benachbarte Sauerstoffatome unterbrochen sein kann, und R⁶ für C₁- bis C₄-Alkyl steht,
R² und R³ Wasserstoff oder eine Gruppe der Formel -CH₂-N(CH₂COOM)₂, in der M für Wasserstoff, Alkalimetall, Ammonium oder substituiertes Ammonium steht, bezeichnet, wobei mindestens einer der Reste R² oder R³ eine Gruppe der Formel -CH₂-N(CH₂COOM)₂ bezeichnen muß, und
R⁴ für eine Gruppe der Formel -CO-O-R⁵, -CO-NH-R⁵ oder CO-NR⁶-R⁵ steht,
als Komplexbildner für Erdalkali- und Schwermetallionen, dadurch gekennzeichnet, daß man sie in Bleichbädern in der Papier- und Zellstoffindustrie einsetzt.

2. Verwendung nach Anspruch 1 von Phenolderivaten der allgemeinen Formel Ia 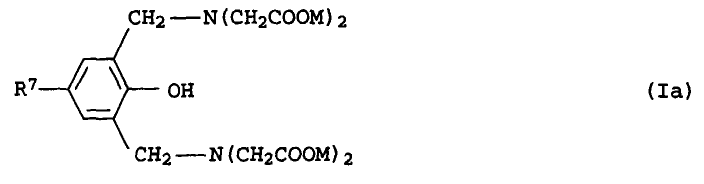 in der
R⁷ C₈- bis C₁₈-Alkyl bedeutet und
M für Wasserstoff, Alkalimetall, Ammonium oder substituiertes Ammonium steht.
